# DEMANDE DE BREVET EUROPEEN

(11) **EP 2 213 191 A1**
(43) Date de publication de la demande: **04.08.2010**
(21) Numéro de dépôt: 10000068.6
(22) Date de dépôt: 07.01.2010
(51) Int. Cl.: A43C 7/00, F16G 11/10

(54) **Dispositif de blocage de brins souples**

(30) Priorité: 29.01.2009 FR 0900377
(71) Demandeur: SALOMON S.A.S., 74370 Metz-Tessy (FR)
(72) Inventeur: Leick, Patrick, 74370 Villaz (FR)

(57) **Abrégé**

Dispositif de blocage (23), pour au moins un brin (24, 25), comprenant une première partie (31) et une deuxième partie (32).

Le dispositif (23) comprend une articulation (40) qui relie l'une à l'autre les parties (31, 32), la première partie (31) présentant une première zone de blocage (41) et une première zone de sollicitation (42), la deuxième partie (32) présentant une deuxième zone de blocage (43) et une deuxième zone de sollicitation (44), l'articulation (40) permettant un rapprochement relatif des zones de blocage (41, 43) quand les zones de sollicitation (42, 44) s'éloignent l'une de l'autre, et vice versa, le dispositif de blocage (23) comprenant encore un guide principal (73) qui maintient chaque brin (24, 25) entre les zones de blocage (41, 43), ainsi qu'un moyen élastique (46) qui sollicite les zones de blocage (41, 43) l'une vers l'autre.

## Description

L'invention concerne un dispositif mécanique de blocage de brins souples, tels que des cordes, des fils, des lacets, ou tout autre produit présenté sous un aspect similaire.

L'invention a trait plus particulièrement au blocage des lacets de chaussures ou d'autres articles d'habillement, de rangement.

L'invention concerne plus particulièrement encore le domaine du sport, et notamment les chaussures de marche, de course à pied, de randonnée, de vélo, de ski de fond, de surf sur neige ou snowboard, de ski de piste, ou autre. L'invention concerne tout article à fermer ou à serrer, tel qu'un sac, un vêtement, ou autre.

Il est connu de bloquer des brins souples ou des fils à l'aide d'un dispositif.

Par exemple le document FR 2 706 743 divulgue un dispositif de blocage agissant pour au moins un fil. Selon ce document le dispositif comporte un poussoir définissant l'axe de rotation d'un organe de blocage, ainsi qu'un corps creux dont une cavité définit d'une part au moins un chemin de passage pour chaque brin de fil, et d'autre part un logement de l'organe de blocage. Ce dernier est de forme circulaire et libre en rotation autour de l'axe lui-même mobile en translation.

Le dispositif selon le document FR 2 706 743 fonctionne par coopération de l'organe de blocage avec chaque chemin pour le blocage de chaque brin de fil par effet de coincement. L'organe de blocage est sollicité élastiquement dans le sens de blocage du ou des brins de fil par action sur son axe de rotation.

Ainsi, bien qu'étant sollicité élastiquement, l'organe de blocage demeure libre en rotation et permet d'équilibrer les tensions sur les deux brins du fil même en cas de différence entre les efforts exercés sur les brins. Le blocage est donc toujours réalisé.

L'opération inverse, celle de déblocage, est obtenue par action manuelle sur le poussoir contre la sollicitation élastique.

Il est apparu que l'opération de déblocage n'est pas toujours facile, notamment pour les jeunes enfants.

En effet dans un souci de compacité le poussoir est plaqué contre le corps creux. Cela impose à un utilisateur de maintenir le corps creux en même temps qu'il déplace le poussoir lorsqu'il veut débloquer le lacet. Lé maintien du corps conjugué au déplacement du poussoir est une opération relativement difficile pour de jeunes enfants. Cette opération est d'autant plus difficile que la taille du dispositif est réduite. Il peut être nécessaire d'utiliser les deux mains.

De plus le dispositif est souvent logé dans un endroit peu accessible et peu volumineux. C'est le cas par exemple pour certaines applications au domaine de la chaussure avec rabats, le dispositif prenant place dans un espace entre des rabats. Il s'ensuit que l'accessibilité au dispositif est réduite, ce qui contribue à la difficulté pour actionner le poussoir.

Enfin le déblocage est encore moins facile quand l'utilisateur porte des gants, car ces derniers gênent les manipulations du dispositif.

Chacun des facteurs ci-avant énumérés peut contribuer à gêner l'opération de déblocage.

Par rapport à cela l'invention vise à obtenir un dispositif de blocage amélioré, résolvant les problèmes ci-avant. L'invention cherche notamment à faciliter l'opération de déblocage d'un dispositif de blocage. Par corollaire l'invention cherche à améliorer l'opération inverse, c'est-à-dire celle de blocage de chaque brin. Cela revient à dire que l'on cherche à rendre plus faciles et plus rapides les opérations de déblocage et de blocage.

On le verra mieux par la suite, l'invention cherche aussi à obtenir le blocage d'un nombre quelconque de brins, y compris le blocage d'un brin unique.

L'invention cherche encore à obtenir le blocage de chaque brin, ce qui veut dire notamment qu'une différence de tension entre deux brins ne doit pas empêcher ou réduire le blocage de l'un d'eux.

Pour ce faire l'invention propose un dispositif de blocage, pour au moins un brin, comprenant une première partie et une deuxième partie.

Le dispositif de blocage selon l'invention est caractérisé par le fait qu'il comprend une articulation qui relie l'une à l'autre les parties, la première partie présentant une première zone de blocage et une première zone de sollicitation, la deuxième partie présentant une deuxième zone de blocage et une deuxième zone de sollicitation, l'articulation permettant un rapprochement relatif des zones de blocage quand les zones de sollicitation s'éloignent l'une de l'autre, et vice versa, le dispositif de blocage comprenant encore un guide principal qui maintient chaque brin entre les zones de blocage, ainsi qu'un moyen élastique qui sollicite les zones de blocage l'une vers l'autre.

Le dispositif de blocage selon l'invention s'apparente donc à une pince qui serre et qui bloque chaque brin, de manière réversible, entre les première et deuxième zones de blocage. Le moyen élastique rend l'action du dispositif permanente. Le moyen élastique sert à amorcer le blocage, celui-ci étant amplifié par l'action de chaque brin sur une zone de sollicitation. Un simple rapprochement relatif des deux zones de sollicitation, obtenu par exemple par simple préhension entre le pouce et l'index, suffit à interrompre le blocage. Cette manipulation, faite contre l'action du moyen élastique, est à la fois simple et rapide. Le déblocage s'effectue donc très simplement, même pour un enfant, par simple pression/pincement sur les zones de sollicitation, le blocage étant assuré automatiquement dès relâchement par les moyens élastiques. Bien entendu le rapprochement des zones de sollicitation implique un éloignement relatif des zones de blocage. On verra par la suite qu'il est prévu qu'une augmentation de la tension des brins amplifie l'effet de blocage. Par exemple sur une chaussure, les brins qui serrent la tige sont disposés pour solliciter les zones de sollicitation dans le sens d'un éloignement relatif. Ainsi une contrainte exceptionnelle sur la tige augmente le serrage des brins.

On remarque que le moyen élastique sollicite les zones de sollicitation dans un sens d'écartement l'une de l'autre.

Un nombre quelconque de brins peut être utilisé, c'est-à-dire un ou plusieurs. En conséquence le dispositif de blocage multiplie les possibilités d'agencements pour la gestion du serrage des articles concernés. Par exemple le système de laçage d'une chaussure peut comprendre un ou plusieurs brins de fil, chaque brin ayant un parcours spécifique.

A partir du moment ou le blocage est réalisé pour un brin, il l'est pour le ou les autres. Une différence de tension entre deux brins n'empêche pas le blocage de l'un d'eux.

D'autres caractéristiques et avantages de l'invention seront mieux compris à l'aide de la description qui va suivre, en regard du dessin annexé illustrant, selon des formes de réalisation non limitatives, comment l'invention peut être réalisée, et dans lequel :
- la figure 1 est une vue en perspective avant d'une chaussure, selon une première forme de réalisation de l'invention,
- la figure 2 est une vue éclatée en double perspective d'un dispositif de blocage, utilisé pour la première forme de réalisation,
- la figure 3 est une coupe selon III-III de la figure 2,
- la figure 4 est une coupe selon IV-IV de la figure 2,
- la figure 5 est une coupe selon V-V de la figure 2,
- la figure 6 est une vue de côté du dispositif de blocage selon la première forme de réalisation,
- la figure 7 est une coupe selon VII-VII de la figure 1, dans un cas où le dispositif de blocage est sollicité dans un sens de déblocage,
- la figure 8 est similaire à la figure 7, dans un cas où le dispositif de blocage exerce un blocage modéré des brins,
- la figure 9 est similaire à la figure 7, dans un cas où le dispositif de blocage exerce un blocage important des brins,
- la figure 10 est une vue de côté d'un dispositif de blocage, selon une deuxième forme de réalisation de l'invention,
- la figure 11 est une vue de côté d'un dispositif de blocage, selon une troisième forme de réalisation de l'invention,
- la figure 12 est une vue de côté d'un dispositif de blocage, selon une quatrième forme de réalisation de l'invention

La première forme de réalisation qui va être décrite après concerne plus spécifiquement des chaussures pour la marche ou la course à pieds sur terrain plat ou mouvementé. Cependant l'invention s'applique à d'autres domaines tels que ceux évoqués avant, tels que des sacs, des vêtements,...

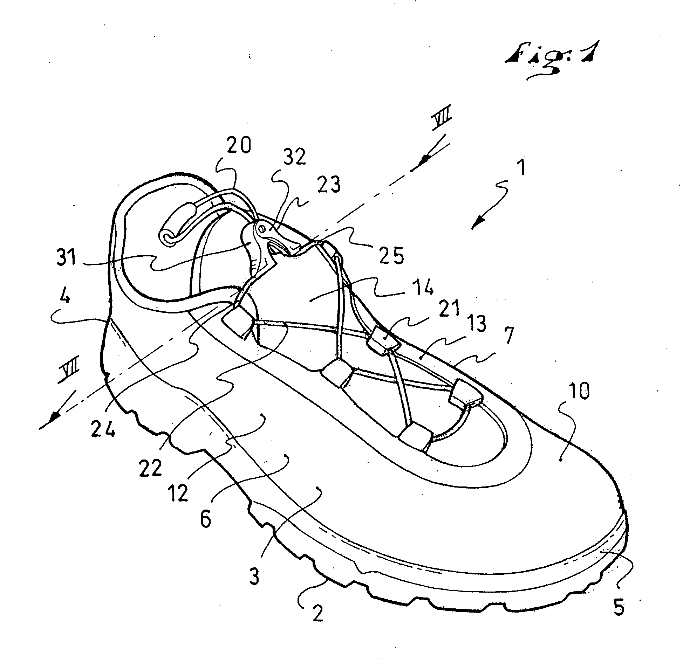

La première forme est décrite ci-après à l'aide des figures 1 à 9.

Comme le montre la figure 1, une chaussure de course 1 est prévue pour accueillir le pied de l'utilisateur.

De manière connue, la chaussure 1 comprend un semelage externe 2 et une tige 3 disposée sur le semelage. La chaussure 1 s'étend en longueur entre une extrémité arrière ou talon 4 et une extrémité avant ou pointe 5, et en largeur entre un côté latéral 6 et un côté médial 7.

Telle que représentée la tige 3 comprend une portion basse 10, prévue pour entourer le pied, à l'exception d'une portion haute. Cependant, il pourrait être également prévu que la tige comprenne aussi une portion haute.

La chaussure 1 est structurée pour permettre un bon déroulement du pied pendant la marche, des transmissions d'informations sensorielles, et des impulsions pour des appuis ou des réceptions. C'est pourquoi le semelage externe 2 et la tige 3 sont relativement souples.

Cependant, il pourrait être également prévu que la chaussure soit plus rigide pour faciliter certaines pratiques, comme le ski, le snowboard, la randonnée, l'alpinisme ou le cyclisme.

La tige 3 comprend notamment un quartier latéral 12, un quartier médial 13, et une languette 14. Cette dernière 14 relie l'un à l'autre les quartiers 12, 13 pour donner à la tige 3 sa continuité. Cependant, il pourrait être prévu de ne pas utiliser de languette. Dans ce cas, les quartiers 12, 13 peuvent rester séparés ou se superposer.

La tige 3 est solidarisée au semelage 2, au niveau de la périphérie du semelage. La solidarisation est faite par collage. Cependant un autre moyen tel qu'une couture, ou la combinaison d'un collage et d'une couture, une injection de la semelle sur la tige, pourrait convenir.

Afin de serrer la tige 3 de manière réversible, la chaussure 1 est munie d'un système de serrage 20. Celui-ci 20 comprend par exemple des passants 21, disposés sur les quartiers latéral 12 et médial 13, un lacet 22, et un dispositif de blocage 23.

Les passants 21 sont connus de l'homme du métier et, de ce fait, ne sont pas décrits en détail ici. Le lacet 22 est lui aussi connu. Selon la première forme de réalisation, de manière non limitative, le lacet 22 chemine le long des passants 21 en faisant un aller et retour depuis le dispositif de blocage 23. En d'autres termes le lacet 22 comprend deux brins 24, 25 qui se prolongent l'un l'autre, chaque brin 24, 25 cheminant d'un quartier 12, 13 à l'autre. En conséquence, on le verra mieux par la suite, le dispositif de blocage 23 est ici prévu pour bloquer les deux brins 24, 25. Cependant, de manière générale, le dispositif 23 est prévu pour au moins un brin. Notamment, il 23 peut être prévu pour un brin unique.

Le dispositif de blocage 23 comprend une première partie 31 et une deuxième partie 32. Selon l'invention, comme on peut l'observer sur les figures 1 à 9, le dispositif de blocage 23 comprend une articulation 40 qui relie l'une à l'autre les parties 31, 32, la première partie 31 présentant une première zone de blocage 41 et une première zone de sollicitation 42, la deuxième partie 32 présentant une deuxième zone de blocage 43 et une deuxième zone de sollicitation 44, l'articulation 40 permettant un rapprochement relatif des zones de blocage 41, 43 quand les zones de sollicitation 42, 44 s'éloignent l'une de l'autre, et vice versa, le dispositif de blocage 23 comprenant encore un guide principal 45 qui maintient chaque brin 24, 25 entre les zones de blocage 41, 43, ainsi qu'un moyen élastique 46 qui sollicite les zones de blocage 41, 43 l'une vers l'autre.

Ainsi le dispositif de blocage présente l'aspect général d'une pince, agencée pour serrer ou bloquer chaque brin 24, 25 de manière réversible. Le serrage se fait naturellement notamment par l'action du moyen élastique 46. On verra plus loin qu'un accroissement de la tension des brins 24, 25 crée une action supplémentaire qui s'ajoute à l'action du moyen élastique : le blocage devient d'autant plus fort que les brins 24, 25 se tendent. Le desserrage, quant à lui, est obtenu simplement par rapprochement relatif des zones de sollicitation 42, 44 à l'encontre du moyen élastique 46. Le rapprochement résulte par exemple d'un pincement des zones de sollicitation entre le pouce et l'index : ce mouvement est facile et rapide à effectuer.

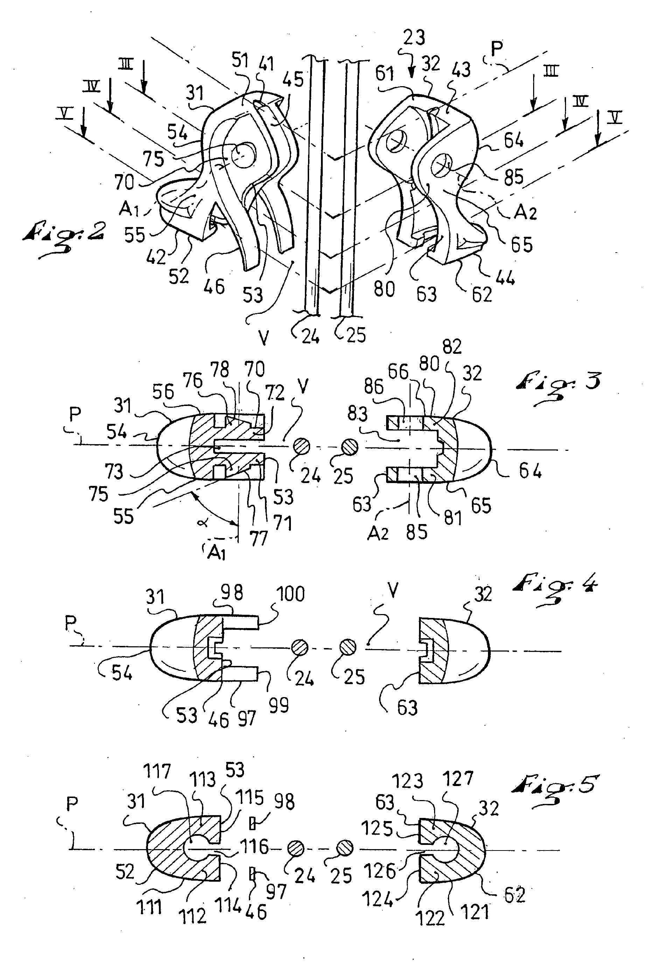

Selon la première forme de réalisation, comme on le voit sur la figure 2, la première partie 31 s'étend en longueur depuis une première extrémité 51 jusqu'à une deuxième extrémité 52, en largeur depuis un bord interne 53 jusqu'a un bord externe 54, et en épaisseur depuis une première face 55 jusqu'à une deuxième face 56 opposée à la première.

Dans le même esprit, la deuxième partie 32 s'étend en longueur depuis une première extrémité 61 jusqu'à une deuxième extrémité 62, en largeur depuis un bord interne 63 jusqu'à un bord externe 64, et en épaisseur depuis une première face 65 jusqu'à une deuxième face 66 opposée à la première.

Comme il va être détaillé par la suite les première 31 et deuxième 32 parties sont prévues pour être assemblées l'une avec l'autre, de façon que les bords internes 53, 63 respectifs des parties 31, 32 soient en regard l'un de l'autre. Entre les bords internes 53, 63, le dispositif de blocage 23 délimite un volume de passage V pour les brins de fil 24, 25. Ce volume est délimité par les bords internes 53, 63, un plan qui contient les premières faces 55, 65, et un plan qui contient les deuxièmes faces 56, 66. Chaque brin 24, 25 chemine, dans le volume V, selon un plan de passage P perpendiculaire aux bords internes 53, 63. Ce plan P est aussi parallèle aux faces 55, 56, 65, 66 des parties 31, 32, et contient les extrémités 51, 52; 61, 62 des parties 31, 32. En d'autres termes, on peut dire que chaque brin de fil 24, 25 traverse le dispositif de blocage 23 d'une extrémité 51, 61 à l'autre 52, 62 de chaque partie 31, 32.

L'assemblage des parties 31, 32. se fait au moyen de l'articulation 40, comme on le comprend toujours à l'aide de la figure 2, mais aussi au regard de la figure 3. L'assemblage des parties 31, 32 est obtenu selon le principe de l'emboîtement, par encliquetage.

De manière non limitative, l'articulation 40 comprend une chape 70 disposée sur le bord interne 53 de la première partie 31, à proximité de la première extrémité 51. La chape 70 comprend une première nervure 71 et une deuxième nervure 72, lesquelles font saillie depuis le bord interne 53. Chaque nervure est parallèle au plan P de passage des brins. Les nervures 71, 72 sont identiques de par leur forme, et en regard l'une avec l'autre. Entre les nervures 71, 72, la chape 70 présente une fente 73 qui sert de guide principal pour chaque brin 24, 25. Bien entendu la fente, ou guide principal 73, est située dans le plan de passage P. La fente 73 présente une largeur supérieure ou égale au diamètre ou à l'épaisseur de chaque brin 24, 25. Cela facilite le glissement des brins.

De manière non limitative, la fente 73 est située à mi-chemin entre les première 55 et deuxième 56 faces de la première partie. Cela guide les brins entre les faces. On remarque en complément que chaque nervure 71, 72 est respectivement en retrait par rapport à la face 55, 56 correspondante.

Un premier tourillon 75 fait saillie depuis la première nervure 71, dans un sens d'éloignement de la fente 73. Par analogie un deuxième tourillon 76 fait saillie depuis la deuxième nervure 72, dans un sens d'éloignement de la fente 73. Les deux tourillons 75, 76 présentent le même diamètre, par exemple compris entre 1 et 8 mm, et sont alignés selon un axe commun A1. Cet axe A1 est perpendiculaire au plan de passage P et, par corollaire, aux faces 55, 56 de la première partie 31. On remarque que chaque tourillon 75, 76 présente respectivement une extrémité libre 77, 78 inclinée. Cela signifie que chaque extrémité forme avec l'axe A1 un angle α compris par exemple entre 30 et 85°. Cette disposition des tourillons 75, 76 facilite l'emboîtement mutuel des parties 31, 32, et donc le montage, comme on le verra plus complètement après.

Dans cet esprit l'articulation 40 comprend également une fourche 80 disposée sur le bord interne 63 de la deuxième partie 32, à proximité de la première extrémité 61. On verra par la suite que la fourche 80 accueille la chape 70. La fourche 80 comprend une première aile 81 et une deuxième aile 82, lesquelles font saillie depuis le bord interne 63. Chaque aile 81, 82 est parallèle au plan P de passage des brins. Les ailes 81, 82 sont similaires de par leur forme, et en regard l'une avec l'autre. Entre les ailes 81, 82, la fourche 80 délimite un logement 83 pour la chape 70. Bien entendu le logement 83 est situé dans le plan P. Le logement 83 présente une largeur égale ou légèrement supérieure à l'épaisseur de la chape 70. Cela permet l'introduction des nervures 71, 72 entre les ailes 81, 82.

On remarque en complément que chaque aile 81, 82 affleure respectivement une face 65, 66 de la deuxième partie 32.

Pour accueillir le premier tourillon 75, une cavité 85 est ménagée dans la première aile 81. Par analogie une deuxième cavité 86 est ménagée dans la deuxième aile 82, pour accueillir le deuxième tourillon 76. Les deux cavités 85, 86 sont par exemple des trous circulaires, de même diamètre, qui sont alignés selon un axe commun A2. Cet axe A2 est perpendiculaire au plan de passage P et, par corollaire, aux faces 65, 66 de la deuxième partie 32.

Il est évident que le diamètre de chaque trou 85, 86 est égal ou légèrement supérieur au diamètre du tourillon 75, 76 avec lequel il coopère. Ainsi le diamètre d'un trou est compris entre 1 et 9 mm.

La solidarisation des parties 31, 32 l'une avec l'autre est donc simple. Il suffit de les rapprocher l'une de l'autre de façon que les bords internes 53, 63 soient en regard l'un avec l'autre. Bien entendu l'orientation des parties 31, 32 est telle que les premières extrémités 51, 61 et les deuxièmes extrémités 52, 62 sont aussi respectivement en regard les unes des autres. Il s'ensuit que la chape 70 fait face au logement 83 de la fourche 80. Il suffit de poursuivre le rapprochement des parties pour introduire la chape 70 dans la fourche 80. En conséquence chaque tourillon 75, 76 prend place dans un trou 85, 86. Cela revient à dire que les axes A1 des tourillons et A2 des trous sont confondus. L'articulation 40 est réalisée, dans le sens où elle 40 maintient ensemble les parties 31, 32, et dans le sens où elle permet une rotation relative des parties selon le plan P de passage des brins 24, 25. L'axe de l'articulation 40, référencé par A1 ou A2, est perpendiculaire au plan P de passage des brins 24, 25.

L'emboîtement de la chape 70 dans la fourche 80 est facilité parce que les extrémités libres 77, 78 des tourillons sont inclinées et, de ce fait, agissent comme des leviers pour faire fléchir momentanément les ailes 81, 82 de la fourche. Cela signifie que la fourche 80 se déforme élastiquement, de manière réversible, pour permettre l'assemblage des parties.

Bien entendu d'autres modes d'articulation peuvent être prévus. Celui décrit a l'avantage de nécessiter moins de pièces et d'être facile à monter.

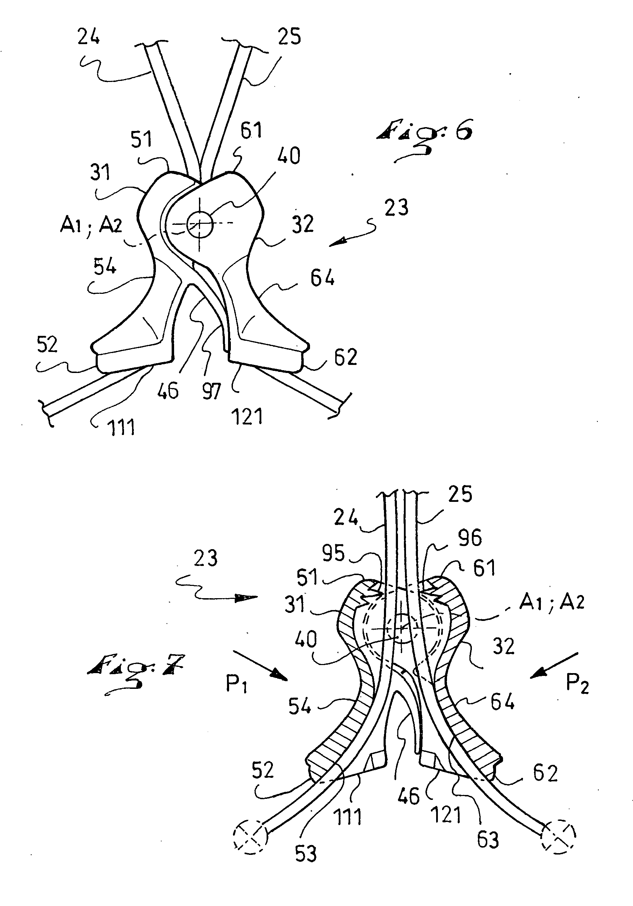

Selon la première forme de réalisation et de manière non limitative, comme on le voit sur les figures 2 et 7, la première zone de blocage 41 se situe au niveau de la première extrémité 51. Cette zone 41 comprend par exemple une ou plusieurs dents 95 en saillie depuis le bord interne 53, pour pincer ou serrer un ou plusieurs brins 24, 25. Chaque dent 95 se situe à mi-chemin entre les première 55 et deuxième 56 faces. Dans le même esprit, la deuxième zone de blocage 43 se situe au niveau de la première extrémité 61. Cette zone 43 comprend elle aussi une ou plusieurs dents 96 en saillie depuis le bord interne 63, pour pincer ou serrer chaque brin 24, 25. Là encore chaque dent 96 se situe à mi-chemin entre les première 65 et deuxième 66 faces. Bien entendu, les dents respectives 95, 96 des première 31 et deuxième 32 parties coopèrent pour réaliser le pincement ou le serrage de chaque brin 24, 25.

Les première 41 et deuxième 43 zones de blocage sont sollicitées en permanence l'une vers l'autre par le moyen élastique 46. Cela revient à dire que les premières extrémités 51, 61 des deux parties 31, 32 sont sollicitées en permanence l'une vers l'autre, de façon à réaliser le pincement des brins entre ces deux extrémités. Pour ce faire le moyen élastique 46 comprend au moins une lame 97, 98 sollicitant les zones de sollicitation 42, 44 dans un sens d'écartement l'une de l'autre. De manière non limitative, une première lame 97 et une seconde lame 98. La première lame 97 fait saillie depuis le bord interne 53, au niveau de la première face 55, jusqu'à une extrémité libre 99. De la même façon la deuxième lame 98 fait saillie depuis le bord interne 53, mais cette fois au niveau de la deuxième face 56, jusqu'à une extrémité libre 100. Il apparaît donc que la première partie 31 du dispositif 23 porte l'intégralité du moyen élastique 46, à savoir les deux lames 97, 98.

On observe que chaque lame 97, 98 est reliée à la première partie 31 entre les extrémités 51, 52, à proximité de l'articulation 40. Plus précisément chaque lame 97, 98 est solidarisée à la partie 31 entre la deuxième extrémité 52 et l'articulation 40. Les deux lames 97, 98 présentent la même forme générale, et sont disposées en regard l'une de l'autre, comme on le voit aussi sur la figure 4. Cela revient à dire qu'elles 97, 98 sont symétriques par rapport au plan de passage P. Cela permet d'équilibrer les actions des lames de part et d'autre du plan P. Les extrémités libres 99, 100 des lames prennent appui sur le bord interne 63 de la deuxième partie 32, pour provoquer le rapprochement relatif des dents 95, 96.

Afin de favoriser sa flexion progressive, chaque lame 97, 98 présente une épaisseur qui se réduit depuis le bord interne 53 jusqu'à l'extrémité libre. 99, 100. Chaque lame est implantée en biais, sur le bord interne 53, ce qui répartit les contraintes de flexion sur toute sa longueur. On remarque que chaque brin de fil 24, 25 passe entre les lames 97, 98.

Selon la forme de réalisation décrite les lames 97, 98 sont issues de matière de la partie 31, ce qui facilite l'assemblage. Elles peuvent alternativement être prévues comme des ressorts séparés.

Le dispositif de blocage 23 est structuré pour que chaque zone de sollicitation 42, 44 contribue à réduire ou accentuer l'action du moyen élastique 46, en fonction des circonstances.

Selon la première forme de réalisation, la première zone de sollicitation 42 se situe au niveau de la deuxième extrémité 52. Cette zone 42 comprend la partie du bord externe 54 qui rejoint la deuxième extrémité 52. On remarque qu'à cet endroit le bord externe 54 est concave, pour faciliter la coopération avec les doigts d'une main. Cela revient à dire que la première zone de sollicitation 42 est configurée pour être sollicitée à la main. Cependant, cette zone 42 est également prévue pour être sollicitée par un brin de fil et, à ce titre, elle 42 comprend aussi la partie du bord interne 53 qui rejoint la deuxième extrémité 52. A cet endroit le bord interne 53 est convexe. Cela facilite la coopération d'un brin avec le dispositif de blocage 23, comme on le verra mieux par la suite. On peut cependant déjà préciser que dans cet esprit, comme le montre la figure 5, la première zone de sollicitation 42 comprend un premier guide secondaire 111. De manière non limitative, celui-ci 111 se situe au niveau du bord interne 53, près de la deuxième extrémité 52. Le guide 111 comprend un premier doigt 112 et un deuxième doigt 113, en saillie depuis le bord interne 53, respectivement vers une première extrémité libre 114 et une deuxième extrémité libre 115. A hauteur des extrémités 114, 115 les doigts 112, 113 se rapprochent, sans toutefois se toucher. L'espace entre les doigts se décompose donc en une entrée 116, au niveau des extrémités 114, 115, ainsi qu'en une chambre 117, au niveau de la jonction avec le bord interne 53. L'entrée 116 est un peu plus étroite que le brin 24, tandis que la chambre 117 présente une section égale ou supérieure à celle du brin. Il est donc possible d'introduire le brin 24 dans la chambre 117 en passant légèrement en force par l'entrée 116. Bien entendu lors de l'introduction le brin est poussé dans un sens de placage sur le bord interne 53. Ensuite le guide 111 maintient le brin de lacet 24 au contact ou à proximité du bord interne 53.

Selon le même principe la deuxième zone de sollicitation 44 se situe au niveau de la deuxième extrémité 62. Cette zone 44 comprend la partie du bord externe 64 qui rejoint la deuxième extrémité 62. On remarque qu'à cet endroit le bord externe 64 est concave, pour faciliter la coopération avec les doigts d'une main. Cela revient à dire que la deuxième zone de sollicitation 44 est configurée pour être sollicitée à la main. Cependant, cette zone 44 est également prévue pour être sollicitée par un brin de fil et, à ce titre, elle 44 comprend aussi la partie du bord interne 63 qui rejoint la deuxième extrémité 62. A cet endroit le bord interne 63 est convexe. Cela facilite la coopération d'un brin 25 avec le dispositif de blocage 23. La deuxième zone de sollicitation 44 comprend un deuxième guide secondaire 121. Celui-ci se situe au niveau du bord interne 63, près de la deuxième extrémité 62. Le guide 121 comprend un premier doigt 122 et un deuxième doigt 123, en saillie depuis le bord interne 63, respectivement vers une première extrémité libre 124 et une deuxième extrémité libre 125. A hauteur des extrémités 124, 125 les doigts 122, 123 se rapprochent. L'espace entre les doigts se décompose entre une entrée 126 et en une chambre 127. Là encore l'entrée 126 est un peu plus étroite que le brin 25, et la chambre 127 présente une section égale ou supérieure à celle du brin. Ce dernier coopère avec le deuxième guide 121 comme dans le cas du premier 111. Le brin de lacet 25 est maintenu au contact ou à proximité du bord interne 63.

On remarque qu'au final chaque zone de sollicitation 42, 44 comprend un guide secondaire 111, 121 et que chaque brin 24, 25 est maintenu dans le plan de passage P par le guide principal 73 et les guides secondaires 111, 121. Le guide principal 73 et les guides secondaires 111, 121 définissent le plan de passage P. Bien entendu, chaque brin 24, 25 est maintenu dans un guide secondaire 111, 121. Selon la première forme de réalisation et de manière non limitative, le dispositif de blocage 23 comprend deux pièces uniques. La première pièce comprend la première partie 31, la première nervure 71, la deuxième nervure 72, le premier tourillon 75, le deuxième tourillon 76, la première lame 97, la deuxième lame 98, et le premier guide secondaire 111. La deuxième pièce quant à elle comprend la deuxième partie 32, la première aile 81, la deuxième aile 82, et le deuxième guide secondaire 121. Chaque pièce est monobloc, réalisée par exemple avec une matière plastique telle qu'un polyuréthane, un polyamide, ou autre. Cela rend le dispositif facile à fabriquer, et rapide à assembler.

Le fonctionnement du dispositif de blocage 23 est expliqué ci-après à l'aide des figures 1 et 6 à 9.

Dans une situation courante d'utilisation de la chaussure 1, comme c'est le cas sur les figures 1 et 6, le dispositif de blocage 23 maintient les brins 24, 25 en tension. Bien entendu les brins 24, 25 sont tendus du côté des deuxièmes extrémités 52, 62, et mous du côté des premières extrémités 51, 61. Il est possible de desserrer la chaussure 1 comme on le comprend à l'aide de la figure 7. Il suffit d'une action manuelle sur les bords externes 54, 64 des parties 31, 32, à hauteur des deuxièmes extrémités 52, 62, dans un sens de rapprochement l'une vers l'autre de ces dernières. Cette action est symbolisée par les flèches P1, P2. En d'autres termes l'utilisateur pince le dispositif 23 du côté des passants 21. Lors du pincement, les dents 95, 96 s'éloignent les unes des autres, ce qui autorise un libre coulissement des brins 24, 25 dans le plan de passage P. L'utilisateur peut donc faire glisser le dispositif 23 le long des brins pour accroître le serrage ou, au contraire, le réduire. On remarque que le pincement se fait contre l'action du moyen élastique 46.

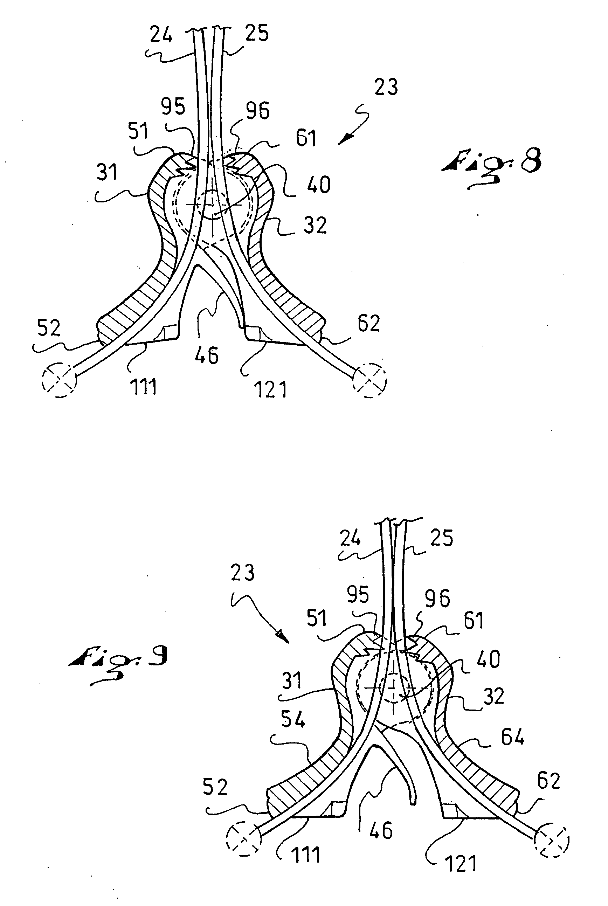

Bien entendu le serrage est opéré dès que l'utilisateur relâche le dispositif 23, comme on le voit sur la figure 8. L'action du moyen élastique 46, en l'occurrence par les lames 97, 98, sollicite en permanence les dents 95, 96 dans un sens de rapprochement les unes vers les autres. Cela suffit au maintien du dispositif de blocage 23 dans une position stable le long des brins 24, 25. Le serrage des brins est amplifié quand la tension du lacet 22 augmente à hauteur des passants. Dans ce cas les brins 24, 25 sollicitent les deuxièmes extrémités 52, 62 dans un sens d'éloignement l'une de l'autre. Par corollaire les dents 95, 96 sont sollicitées les unes vers les autres.

En complément on remarque, à l'aide des figures 8 et 9, que le serrage des brins 24, 25 par les zones de blocage 41, 43 est proportionnel à la tension de la tige 3 ou du lacet 22. Si cette tension s'accroît, le serrage des brins devient plus fort. Cela est dû à l'architecture en forme de pince du dispositif de blocage 23, et au guidage par les guides secondaires 111, 121 qui permettent de répercuter les tensions sur les zones de sollicitation.

On remarque que, par corollaire, le volume de passage V varie en fonction de la tension des brins. Le volume V augmente quand la tension augmente, et inversement.

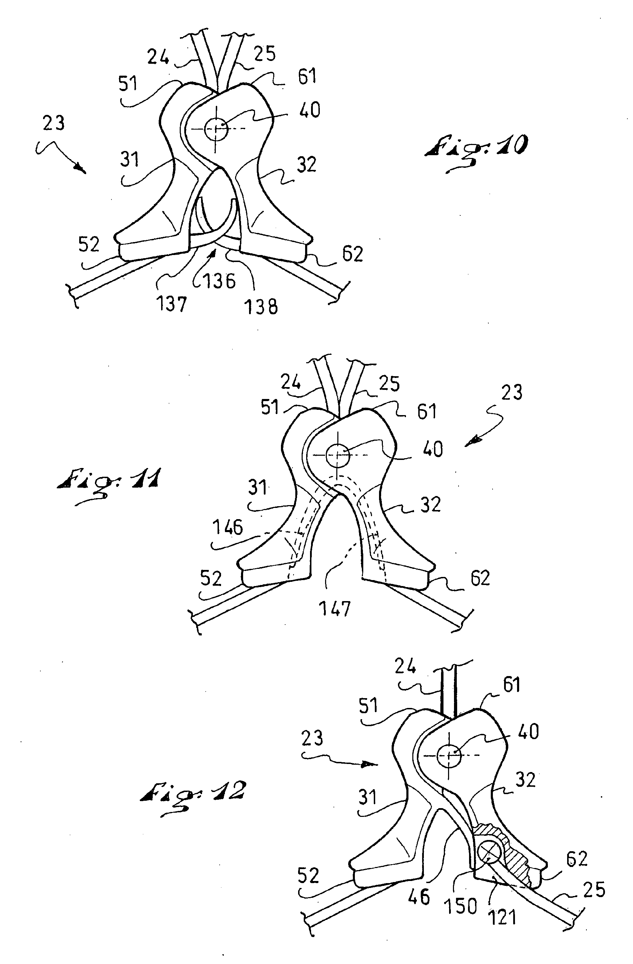

Les autres formes de réalisation de l'invention sont présentées ci-après à l'aide des figures 10 à 12. Pour des raisons de commodité, les éléments communs avec la première forme sont désignés par les mêmes références.

La deuxième forme de réalisation est présentée à l'aide de la figure 10. On retrouve une première partie 31 et une deuxième partie 32 reliées entre elles par une articulation 40. A nouveau deux brins 24, 25 transitent dans le dispositif de blocage 23, dans le plan P, entre les premières extrémités 51, 61 et les deuxièmes extrémités 52, 62.

Ce qui est spécifique à la deuxième forme de réalisation, c'est la structure du moyen élastique de référence 136. Celui-ci 136 comprend toujours une première lame 137 et une deuxième lame 138. Cependant, ici la première lame 137 fait saillie depuis le bord interne 53 de la première partie 31 à hauteur de la deuxième extrémité 52, tandis que la deuxième lame 138 fait saillie depuis le bord interne 63 de la deuxième partie 32 à hauteur de la deuxième extrémité 62. Cela signifie que le moyen élastique 136 est porté par les deux parties 31, 32. Le fonctionnement du dispositif selon la deuxième forme est similaire à celui selon la première forme.

La troisième forme de réalisation est présentée à l'aide de la figure 11. On retrouve encore les parties 31, 32 et l'articulation 40, ainsi que les brins 24, 25.

Ce qui est spécifique à la troisième forme de réalisation c'est à nouveau la structure du moyen élastique, selon la référence 146. Celui-ci 146 comprend une lame unique rapportée 147 qui relie l'une à l'autre les parties 31, 32, par exemple de la deuxième extrémité 52 à la deuxième extrémité 62. La lame 147 présente la forme générale d'un C, et comprend tout matériau approprié comme un métal, une matière plastique, ou autre. La lame 147 est solidarisée à chaque partie 31, 32, ou à l'une seulement, par tout moyen approprié. On remarque que selon la troisième forme de réalisation, le dispositif de blocage 23 comprend trois éléments.

La quatrième forme de réalisation est présentée à l'aide de la figure 12. Ici le dispositif de blocage 23 est identique ou similaire à celui selon la première forme. La spécificité de la quatrième forme est liée aux brins de fil 24, 24. Le premier brin 24 transite dans le plan de passage P, entre les premières extrémités 51, 61 et les deuxièmes extrémités 52, 62, comme il a été expliqué par exemple pour la première forme de réalisation. Mais ici un seul brin 24 est serré de manière réversible par le dispositif 23. L'autre brin 25, quant à lui, est immobilisé en permanence par rapport au dispositif. Par exemple le deuxième brin 25 est retenu à la deuxième partie 32 par un noeud 150, lequel coopère avec le deuxième guide secondaire 121, pour empêcher une séparation du brin 25 et de la partie lors d'une mise en tension du système de serrage. Bien entendu dans ce cas la tension ou le relâchement s'obtiennent par déplacement relatif du premier brin 24 et du dispositif 23. Le fonctionnement est le même que pour les autres formes de réalisation.

Dans tous les cas l'invention est réalisée à partir de matériaux et selon des techniques de mise en oeuvre connus de l'homme du métier.

Bien entendu l'invention n'est pas limitée aux formes de réalisation ci-avant décrites, et comprend tous les équivalents techniques pouvant entrer dans la portée des revendications qui vont suivre.

Notamment le dispositif de blocage 23 peut comprendre plus de deux ou trois pièces.

On pourrait résumer l'invention par un dispositif de blocage, pour au moins un brin, comprenant une première partie et une deuxième partie, les parties coopérant l'une avec l'autre à la manière d'une pince, le dispositif comprenant des moyens pour solliciter les brins dans un état de blocage, ainsi que des moyens pour interrompre le blocage.

## Revendications

1. Dispositif de blocage (23), pour au moins un brin (24, 25), comprenant une première partie (31) et une deuxième partie (32),
**caractérisé par le fait qu'**il comprend une articulation (40) qui relie l'une à l'autre les parties (31, 32), la première partie (31) présentant une première zone de blocage (41) et une première zone de sollicitation (42), la deuxième partie (32) présentant une deuxième zone de blocage (43) et une deuxième zone de sollicitation (44), l'articulation (40) permettant un rapprochement relatif des zones de blocage (41, 43) quand les zones de sollicitation (42, 44) s'éloignent l'une de l'autre, et vice versa, le dispositif de blocage (23) comprenant encore un guide principal (73) qui maintient chaque brin (24, 25) entre les zones de blocage (41, 43), ainsi qu'un moyen élastique (46, 136, 146) qui sollicite les zones de blocage (41, 43) l'une vers l'autre.

2. Dispositif de blocage (23) selon la revendication 1, **caractérisé par le fait que** la première zone de blocage (41) se situe au niveau d'une première extrémité (51) de la première partie (31), et **par le fait que** la deuxième zone de blocage (43) se situe au niveau d'une première extrémité (61) de la deuxième partie (32).

3. Dispositif de blocage (23) selon la revendication 1 ou 2, **caractérisé par le fait que** l'articulation (40) comprend une chape (70) disposée sur la première partie (31), la chape (70) comprenant une première nervure (71) et une deuxième nervure (72), un premier tourillon (75) faisant saillie depuis la première nervure (71), un deuxième tourillon (76) faisant saillie depuis la deuxième nervure (72), l'articulation (40) comprenant également une fourche (80) disposée sur la deuxième partie (32), la fourche (80) comprenant une première aile (81) et une deuxième aile (82), une première cavité (85) étant ménagée dans la première aile (81) pour accueillir le premier tourillon (75), et une deuxième cavité (86) étant ménagée dans la deuxième aile (82) pour accueillir le deuxième tourillon (76).

4. Dispositif de blocage (23) selon l'une des revendications 1 à 3, **caractérisé par le fait que** l'axe (A1, A2) de l'articulation (40) est perpendiculaire au plan (P) du passage des brins (24, 25).

5. Dispositif de blocage (23) selon l'une des revendications 1 à 4, **caractérisé par le fait qu'**il présente une fente (73) qui sert de guide principal pour chaque brin (24, 25).

6. Dispositif de blocage (23) selon l'une des revendications 1 à 5, **caractérisé par le fait que** chaque zone de sollicitation (42, 44) comprend un guide secondaire (111, 121).

7. Dispositif de blocage (23) selon la revendication 6, **caractérisé par** Te fait que chaque brin (24, 25) est maintenu dans un guide secondaire (111, 121).

8. Dispositif de blocage (23) selon l'une des revendications 1 à 7, **caractérisé par le fait que** le guide principal (73) et les guides secondaires (111, 121) définissent le plan de passage (P).

9. Dispositif de blocage (23) selon l'une des revendications 1 à 8, **caractérisé par le fait que** le moyen élastique (46, 136, 146) sollicite les zones de sollicitation (42, 44) dans un sens d'écartement l'une de l'autre.

10. Dispositif de blocage (23) selon l'une des revendications 1 à 9, **caractérisé par le fait que** le moyen élastique (46, 136, 146) comprend au moins une lame (97, 98, 137, 138, 147) sollicitant les zones de sollicitation (42, 44) dans un sens d'écartement l'une de l'autre.

11. Dispositif de blocage (23) selon l'une des revendications 1 à 10, **caractérisé par le fait que** le moyen élastique (46) comprend une première lame (97) et une seconde lame (98), la première partie (31) du dispositif (23) portant les deux lames (97, 98).

12. Dispositif de blocage (23) selon l'une des revendications 1 à 10, **caractérisé par le fait que** le moyen élastique (136) comprend une première lame (137) qui fait saillie depuis la première partie (31), et une deuxième lame (138) qui fait saillie depuis la deuxième partie (32).

13. Dispositif de blocage (23) selon l'une des revendications 1 à 10, **caractérisé par le fait que** le moyen élastique (146) comprend une lame unique (147) qui relie l'une à l'autre les parties (31, 32).

14. Dispositif de blocage (23) selon la revendication 11, **caractérisé par le fait qu'**il comprend deux pièces uniques, la première pièce comprenant la première partie (31), la première nervure (71), la deuxième nervure (72), le premier tourillon (75), le deuxième tourillon (76), la première lame (97), la deuxième lame (98) et le premier guide secondaire (111), la deuxième pièce comprenant la deuxième partie (32), la première aile (81), la deuxième aile (82), et le deuxième guide secondaire (121).

15. Dispositif de blocage (23) selon l'une des revendications 1 à 14, **caractérisé par le fait que** la première zone de blocage (41) comprend une ou plusieurs dents (95), et **par le fait que** la deuxième zone de blocage (43) comprend une ou plusieurs dents (96).

16. Dispositif de blocage (23) selon l'une des revendications 1 à 15, **caractérisé par le fait que** l'assemblage des parties (31, 32) est obtenu par encliquetage.

17. Dispositif de blocage (23), pour au moins un brin (24, 25), comprenant une première partie (31) et une deuxième partie (32), **caractérisé par le fait que** les parties (31, 32) coopèrent l'une avec l'autre à la manière d'une pince, le dispositif (23) comprenant des moyens pour solliciter les brins (24, 25) dans un état de blocage, ainsi que des moyens pour interrompre le blocage.
